Europäisches Patentamt

(19) European Patent Office  (11) Numéro de publication: **0 123 000**
**B1**
Office européen des brevets

(12) **FASCICULE DE BREVET EUROPEEN**

(45) Date de publication du fascicule du brevet: **20.11.86**  (51) Int. Cl.⁴: **B 60 Q 3/04**

(21) Numéro de dépôt: **83401102.5**

(22) Date de dépôt: **01.06.83**

(54) **Rampe lumineuse pour l'éclairage de tableaux de bord, notamment sur avions ou hélicoptères.**

(30) Priorité: **20.04.83 FR 8306502**

(43) Date de publication de la demande:
**31.10.84 Bulletin 84/44**

(45) Mention de la délivrance du brevet:
**20.11.86 Bulletin 86/47**

(84) Etats contractants désignés:
**AT BE CH DE GB IT LI LU NL SE**

(56) Documents cités:
**DE-A-2 305 503**
**FR-A-1 331 474**

(73) Titulaire: **SOCIETE D'EXPLOITATION DU LABORATOIRE ABADIE**
**Route de Tarbes**
**F-65500 Vic en Bigorre (FR)**

(72) Inventeur: **Benquey, Jean**
**Monfaucon**
**F-65140 Rabastens de Bigorre (FR)**
Inventeur: **Benquey, Louisa**
**Monfaucon**
**F-65140 Rabastens de Bigorre (FR)**

(74) Mandataire: **Chameroy, Claude et al**
**c/o Cabinet Malemont**
**42, avenue du Président Wilson**
**F-75116 Paris (FR)**

EP 0 123 000 B1

Courier Press, Leamington Spa, England.

# Description

La présente invention concerne une rampe lumineuse pour l'éclairage de tableaux de bord, destinée plus particulièrement aux avions ou hélicoptères, du type comprenant au moins un tube fluorescent venant se loger à l'intérieur d'une armature disposée en avant du tableau de bord. Une rampe de ce type est décrite par exemple dans le brevet FR—A—1 331 474.

On sait qu'à l'heure actuelle, sur certains avions ou hélicoptères, l'équipage utilise des jumelles amplificatrices de lumière. Dans ce cas, il est indispensable de supprimer à l'intérieur de l'habitacle toute trace de lumière dans le spectre visible, car cela perturberait la vision au moyen desdites jumelles. Or, les tubes fluorescents à rayonnement ultraviolet disponibles actuellement sur le marché, même lorsqu'ils sont réalisés en verre de Wood, laissent passer environ 3 à 7% de lumière visible, ce qui est tout à fait prohibitif.

La présente invention a donc pour but principal de remédier à cet inconvénient et, pour ce faire, elle a pour objet une rampe lumineuse du type susmentionné qui se caractérise essentiellement en ce que ledit tube fluorescent émet dans le spectre de l'ultraviolet, et en ce qu'une plaque de verre de Wood est fixée de manière étanche sur l'armature devant ledit tube fluorescent.

On obtient ainsi un éclairage ultraviolet assez puissant, sans trace de lumière visible.

De préférence, la rampe lumineuse est également pourvue d'un tube fluorescent blanc, ambre ou rouge. Bien entendu, ce dernier ne sera allumé qu'en dehors des périodes d'utilisation des jumelles amplificatrices de lumière.

Par ailleurs, chacun des deux tubes est associé à un déflecteur muni de découpes appropriées, afin de réaliser un éclairage uniforme de la surface du tableau de bord.

Une forme d'exécution de l'invention est décrite ci-après à titre d'exemple, en référence aux dessins annexés dans lesquels:

— la figure 1 est une vue simplifiée en coupe d'un tableau de bord équipé d'une rampe d'éclairage conforme à l'invention;

— la figure 2 est une vue en élévation de la rampe suivant la flèche X de la figure 1; et

— la figure 3 est une vue en élévation de la rampe suivant la flèche Y de la figure 1.

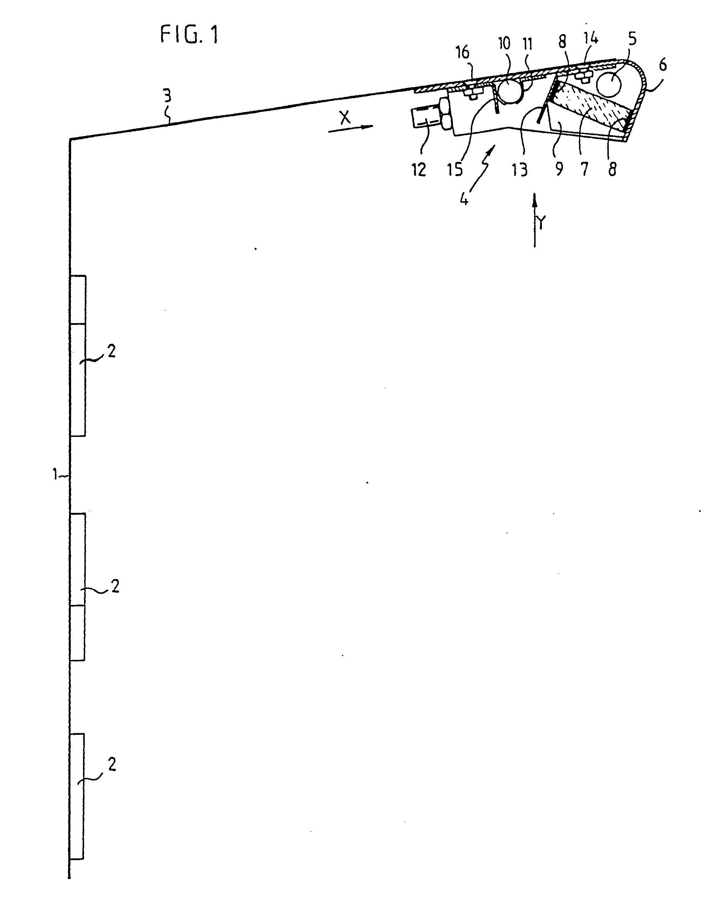

En se référant tout d'abord à la figure 1, on peut avoir un tableau ou planche de bord 1, par exemple pour avion, comportant un certain nombre d'instruments 2. Ce tableau de bord est surmonté d'un déflecteur d'auvent 3 sur lequel est fixée, par vis ou au moyen d'un système à démontage rapide, une rampe lumineuse 4 pour éclairer les différents instruments 2.

Conformément à l'invention, la rampe 4 comprend essentiellement, en combinaison, un tube fluorescent 5 à rayonnement ultraviolet disposé à l'intérieur d'une armature métallique 6 et une plaque 7 en verre de Wood fixée de manière étanche sur ladite armature, par l'intermédiaire de joints tels que 8, devant le tube 5. Ce dernier pourra être en verre ordinaire ou en verre de Wood, mais la plaque 7 sera conçue de manière à ne pas laisser passer plus de 0,5% de lumière visible, permettant ainsi à l'équipage de l'avion d'utiliser des jumelles amplificatrices de lumière dans d'excellentes conditions.

L'ensemble constitué par le tube 5 et la plaque de verre 7 peut être solidaire de l'armature 6, ou bien démontable afin de faciliter le montage des deux éléments, ce montage s'effectuant par l'intermédiaire de pièces métalliques d'extrémité 9.

La rampe lumineuse 4 est par ailleurs équipée d'un tube fluorescent blanc, ambre ou rouge 10, prévu pour éclairer le tableau de bord 1 en 0 dehors des périodes d'utilisation des jumelles amplificatrices par l'équipage. Ce tube est fixé sur l'armature par l'intermédiaire de demi-colliers 11.

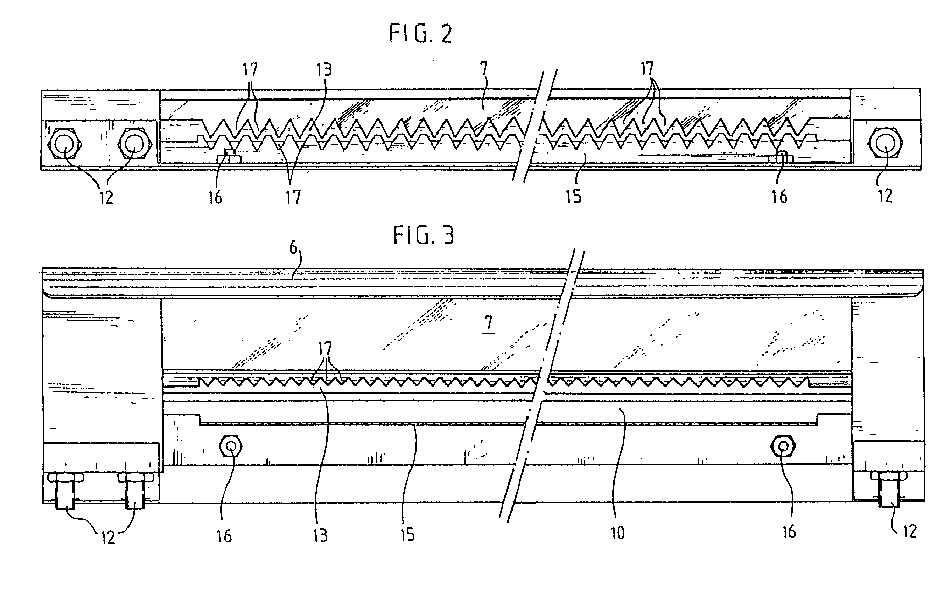

Les deux tubes fluorescents 5 et 10 sont alimentés en courant par l'intermédiaire de prises coaxiales 12, visibles sur les figures 2 et 3, de manière à éviter la formation de parasites.

Afin d'obtenir un éclairage homogène de la surface du tableau de bord 1, chacun de ces tubes fluorescents est en outre associé à un déflecteur ajouré. Le tube 5 est ainsi associé à un déflecteur 13 maintenu sur l'armature 6 par des vis telles que 14. De même, le tube 10 est associé à un déflecteur 15 maintenu sur l'armature par des vis telles que 16.

Comme on peut le voir plus clairement sur les figures 2 et 3, les bords inférieurs de ces deux déflecteurs sont pourvus de découpes 17, en forme de V dans cet exemple, dont le nombre et les dimensions dépendent essentiellement de la hauteur du tableau de bord 1 et de la disposition des instruments 2. En principe, la partie pleine du déflecteur bloque les rayons lumineux allant vers le sommet du tableau de bord qui est toujours trop éclairé, tandis que la partie découpée du déflecteur bloque partiellement les rayons lumineux allant vers la partie médiane du tableau de bord. Quant à la partie basse du tableau de bord, qui est la plus éloignée de la rampe lumineuse 4, elle se trouve éclairée par des rayons qui ne subissent aucun obstacle.

## Revendications

1. Rampe lumineuse pour l'éclairage de tableaux de bord, notamment sur avions ou hélicoptères, du type comprenant au moins un tube fluorescent (5) venant se loger à l'intérieur d'une armature (6) disposée en avant du tableau de bord (1), caractérisée en ce que ledit tube fluorescent (5) émet dans le spectre de l'ultraviolet et en ce qu'une plaque de verre de Wood (7) est fixée de manière étanche sur l'armature (6) devant ledit tube fluorescent(s).

2. Rampe lumineuse selon la revendication 1, caractérisée en ce qu'elle est également pourvue d'un tube fluorescent blanc, ambre ou rouge (10).

3. Rampe lumineuse selon la revendication 2, caractérisé en ce que chacun des deux tubes (5, 10) est associé à un déflecteur (13, 15) muni de découpes appropriées (17), afin de réaliser un éclairage uniforme de la surface du tableau de bord (1).

**Patentansprüche**

1. Bandleuchte für Armaturenbretter, insbesondere in Flugzeugen und Hubschraubern, von der Art, die mindestens eine Leuchtröhre (5) im Innern eines im Vorderteil des Armaturenbrettes (1) untergebrachten Instruments umfasst, dadurch gekennzeichnet, daß die Leuchtröhre (5) im Ultraviolettspektrum emittiert und daß eine Wood'sche Glasplatte für ultraviolettes Licht dicht auf der Armatur vor der Leuchtröhre angebracht ist.

2. Bandleuchte nach Anspruch 1, dadurch gekennzeichnet, daß sie enbenfalls mit einer Leuchtröhre für weißes, bernsteinfarbiges oder rotes Licht (10) versehen ist.

3. Bandleuchte nach Anspruch 2, dadurch gekennzeichnet, daß jeder der beiden Röhren (5, 10) ein Ablenkblech (13, 15) zugeordnet ist, das mit geeigneten Ausschnitten (17) versehen ist, um eine gleichmäßige Beleuchtung der Oberfläche des Armaturenbrettes zu bewirken.

**Claims**

1. A light ramp for lighting instrument panels, especially in aircraft or helicopters, of the type comprising at least one fluorescent tube (5) housed inside a frame (6) disposed in front of the instrument panel (1), characterized in that said fluorescent tube (5) is emitting in the ultra-violet spectrum and in that a plate of Wood's glass (7) is sealingly fixed to the frame (6) in front of said fluorescent tube (5).

2. The light ramp according to claim 1, characterized in that it is also provided with a white, amber or red fluorescent tube (10).

3. The light ramp according to claim 2, characterized in that each of the two tubes (5, 10) is associated with a deflector (13, 15) provided with appropriate cutouts (17), so as to provide uniform lighting of the surface of the instrument panel (1).

FIG. 1

# FIG. 2

17  13  7  17

12  16  17  15  16  12

# FIG. 3

6

7

17

12  16  13  15  10  16  12

0 123 000